(19) **Europäisches Patentamt**
**European Patent Office**
**Office européen des brevets**

(11) **EP 1 741 584 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(51) Int Cl.:
***B60H 1/00*** *(2006.01)*

(21) Anmeldenummer: **06013707.2**

(22) Anmeldetag: **03.07.2006**

(54) **Verfahren zur Regelung des Zusammenführens zumindest zweier Teilluftmassenströme zu einem Gesamtluftmassenstrom**

Method for regulating the merging of at least two partial air mass flows into one total air mass flow

Procédé de réglage d'une combination d'au moins deux flux de masse d'air en un flux d'ensemble

(84) Benannte Vertragsstaaten:
**DE FR IT**

(30) Priorität: **06.07.2005 DE 102005031846**

(43) Veröffentlichungstag der Anmeldung:
**10.01.2007 Patentblatt 2007/02**

(73) Patentinhaber: **Behr GmbH & Co. KG**
**70469 Stuttgart (DE)**

(72) Erfinder: **Möllert, Thorsten, Dipl.-Ing. (BA)**
**70499 Stuttgart (DE)**

(56) Entgegenhaltungen:
**DE-A1- 19 752 567      DE-A1- 19 805 883**
**DE-A1- 19 936 688**

**Beschreibung**

Die Erfindung betrifft ein Verfahren zur Regelung des Zusammenführens zumindest zweier Teilluftmassenströme zu einem Gesamtluftmassenstrom bei einem Kraftfahrzeug-Belüftungssystem gemäß dem Oberbegriff des Anspruches 1. Ein solches wird durch die DE 197 52 567 A1 offenbart.

Bei der Umschaltung vom Frischluft- auf den Umluftbetrieb tritt eine Veränderung des Luftmassenstromes, verbunden mit einem unerwünschten Geräusch, auf. Die Problematik entsteht dadurch, dass beim Umschalten von einem Strömungsweg, z.B. Frischluft, auf zeitweise zwei Strömungswege (Teilfrischluft und Teilumluft), sich gleichzeitig auch die zur Verfügung stehenden Ansaugquerschnitte ändern. Die vergrößerten Ansaugquerschnitte bei Frischluft- und Umluft sind mit einem niedrigeren Druckabfall verbunden, so dass sich während des Umschaltens die Luftmenge verändert. Um die Luftmenge möglichst konstant zu halten, ist in der DE 101 54 387 A1 vorgesehen, dass die Gebläsedrehzahl während des oder unmittelbar vor dem Umschalten im Falle eines Umschaltens von Umluft- auf Frischluftbetrieb erhöht und im Falle eines Umschaltens von Frischluft- auf Umluftbetrieb verringert wird.

Ein derartiges Verfahren lässt noch Wünsche offen.

Es ist Aufgabe der Erfindung, ein verbessertes Verfahren zur Verfügung zu stellen. Diese Aufgabe wird gelöst durch ein Verfahren mit den Merkmalen des Anspruchs 1. Vorteilhafte Ausgestaltungen sind Gegenstand der Unteransprüche.

Eine derartige Steuerung der Stellbewegungen bewirkt keine oder eine für die Insassen kaum merkliche Änderung des Gesamtluftmassenstroms, so dass der Komfort des Belüftungssystems hoch ist.

Hierbei ist bevorzugt mindestens eine Stellbewegung mindestens eines der Steuerorgane nicht linear. Unter einer stetigen Änderung des Gesamtluftmassenstroms wird hierbei bevorzugt eine lineare, de- oder progressive Änderung desselben verstanden.

Vorzugsweise werden zwei Teilluftmassenströme zu einem Gesamtluftmassenstrom zusammengeführt, jedoch können auch mehr als zwei Teilluftmassenströme zusammengeführt werden.

Die Nichtlinearität der Stellbewegung des oder der Steuerorgane wird bevorzugt mechanisch, insbesondere mittels einer Kurvenscheibe, erzeugt, d.h. es ist keine spezielle elektronische Steuerung für die Drehgeschwindigkeit des Stellorgans erforderlich, so dass keine weiteren Abstimmungen in Hinblick auf die Elektronik erforderlich sind.

Als Steuerorgane sind bevorzugt Klappen vorgesehen, insbesondere zweiflüglige Klappen mit einer zentralen Schwenkachse, jedoch sind auch beliebige andere Steuerorgane, wie bspw. Trommelklappen, Lamellen oder Jalousieklappen, möglich.

Bevorzugt betrifft die Erfindung ein Verfahren zur Regelung der Frischluft- und Umluftklappen-Steuerung bei einem Kraftfahrzeug-Belüftungssystem, bei dem eine Frischluftklappe am Ende eines Frischluftkanals und eine Umluftklappe am Ende eines Umluftkanals angeordnet ist und die Luft anschließend über einen zumindest bereichsweise gemeinsamen Luftkanal einem ansaugenden Gebläse zugeführt wird, wobei die ansaugseitige Drosselung des Luftstroms durch den Frischluftkanal und den Umluftkanal von einem Ausgangsniveau auf ein Endniveau durch die Stellbewegung der Frischluftklappe und der Umluftklappe angenähert wird. Hierbei ist mindestens eine der Stellbewegungen nicht linear. Für den Antrieb der Klappen kann ein einziges Stellorgan vorgesehen sein, welches die beiden Klappen antreibt. Durch die konstant oder zumindest relativ konstant bleibende Gesamtluftmenge während des Umschaltvorgangs wird der Komfort für die Insassen erhöht. Zudem können Geräusche vermieden werden. Die Gesamtluftmenge kann auch bei geringen Gebläsestufen relativ konstant gehalten werden, so dass bei allen Gebläsestufen Probleme beim Umschalten zwischen Frischluft- und Umluftbetrieb oder zwischen verschiedenen Mischstellungen vermieden werden können.

Aus den Gleichungen

$$\Delta p_{FL} = a(f\alpha)Gl_{FL}^2$$

$$\Delta p_{UL} = b(f\beta)Gl_{UL}^2$$

wobei

| | |
|---|---|
| $\Delta p_{\Phi A}$ | Druckabfall vor Gebläse auf der Frischluftseite |
| $\Delta p_{YA}$ | Druckabfall vor Gebläse auf der Umluftseite |
| $a$ | Koeffizient des Druckabfalls abhängig von $\alpha$ |

(fortgesetzt)

| $b$ | Koeffizient des Druckabfalls abhängig von $\beta$ |
| $\alpha$ | Winkel der Frischluftklappe |
| $\beta$ | Winkel der Umluftklappe |
| $Gl_{FL}$ | Frischluftmassenstrom |
| $Gl_{UL}$ | Umluftmassenstrom |

ergibt sich jeweils eine Kurvenschar des Druckabfalls der Frischluft über der Frischluftmenge in Abhängigkeit des Klappenwinkels, sowie eine Kurvenschar für den Druckabfall der Umluftklappe über dem Umluftmassenstrom in Abhängigkeit vom Umluftklappenwinkel. Die Funktion muss sich jedoch nicht notwendigerweise auf einen Klappenwinkel beziehen. Besonders bevorzugt können auch der Aktuatorenwinkel oder der Aktuatorenweg sowie die Fläche des Strömungsweges (gesamt oder hydraulisch) verwendet werden.

Im Idealfall sind die maximal mögliche Frischluft- und Umluftmengen gleich, so dass die Klappenstellbewegungen gleichzeitig starten und enden. Sind Frischluft- und Umluftmenge identisch, so ergeben sich die Gleichungen

$$\Delta p_{gesamt} = konst.$$

$$\frac{1}{\sqrt{\Delta p_{gesamt}}} = \frac{1}{\sqrt{\Delta p_{FL}}} + \frac{1}{\sqrt{\Delta p_{UL}}}$$

sowie

$$Gl_{gesamt} = Gl_{FL} + Gl_{UL} = konst.$$

Mit oben genannten Gleichungen lässt sich zu jedem Klappenwinkel der Frischluftklappe ein dazugehöriger Klappenwinkel der Umluftklappe zuordnen.

Entsprechende Gleichungssysteme lassen sich auch für andere Steuerorgane aufstellen, so dass sich ein Zusammenhang von Stellung bzw. Öffnungszustand der Steuerorgane ergibt, welcher ein optimiertes Verstellen der Steuerorgane ermöglicht. Dies gilt auch für die folgenden Ausführungen, die vorliegend nur auf zwei Steuerorgane, nämlich eine Frischluft- und eine Umluftklappe beschrieben sind.

Im Falle unterschiedlicher Frischluft- und Umluftmengen erfolgt vorzugsweise eine stetige Anpassung der Gesamtluftmenge an die in der Endstellung vorhandene maximale Luftmenge. Dies erfolgt bevorzugt annähernd linear, progressiv oder degressiv. Dabei ergibt sich eine Zuordnungen der Gesamtluftmenge sowie eine Zuordnung des Gesamtdruckabfalls von Frischluft nach Umluft (oder umgekehrt), wodurch die o.g. Gleichungen wieder lösbar sind.

$$Gl_{gesamt}(t) = Gl_{FL}(t) + Gl_{UL}(t)$$

Bevorzugt wird hierbei die Gesamtluftmenge während des Umschaltens so lange wie möglich konstant gehalten, insbesondere in einem Bereich, in welchem sich beide Klappen bewegen, und am Ende des Umschaltvorganges angepasst, d.h. allmählich angehoben oder abgesenkt, was durch die verbleibende Stellbewegung der sich noch nicht in ihrer Endstellung befindlichen Klappe erfolgt. Die Änderung der Luftmenge nach dem vollständigen Erreichen der Endstellung der ersten Klappe erfolgt hierbei bevorzugt linear, progressiv oder degressiv durch die Stellbewegung der zweiten Klappe.

Erfindungsgemäß wird, wenn eine der Klappen mit konstanter Drehgeschwindigkeit und die zweite Klappe mit einer sich ändernden Drehgeschwindigkeit verstellt. Dies ennöglicht eine direkte Bewegungsübertragung von der sich im Falle eines Verstellens mit im Wesentlichen konstanter Drehgeschwindigkeit drehenden Motorwelle des Antriebsmotors für die erste Klappe und nur für die zweite Klappe ist eine stellungsabhängige Umwandlung der Drehgeschwindigkeit der Motorwelle, bspw. mittels einer Kurvenscheibe, erforderlich.

Bevorzugt wird die Umluftklappe mit konstanter Drehgeschwindigkeit verstellt, während die Frischluftklappe einen nicht linearen Stellbewegungsverlauf aufweist. Dabei sind die Zusammenhänge der durch die einzelnen Klappen strömenden Luftmengen und der Öffnungswinkel in aller Regel nicht linear zueinander.

Bevorzugt ist das Belüftungssystem eine Heizungs- oder Klimaanlage und umfasst zumindest eines der folgenden Bauteile: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle

Im Folgenden wird die Erfindung anhand zweier Ausführungsbeispiele, teilweise unter Bezugnahme auf die Zeichnung, näher erläutert. In der Zeichnung zeigen:

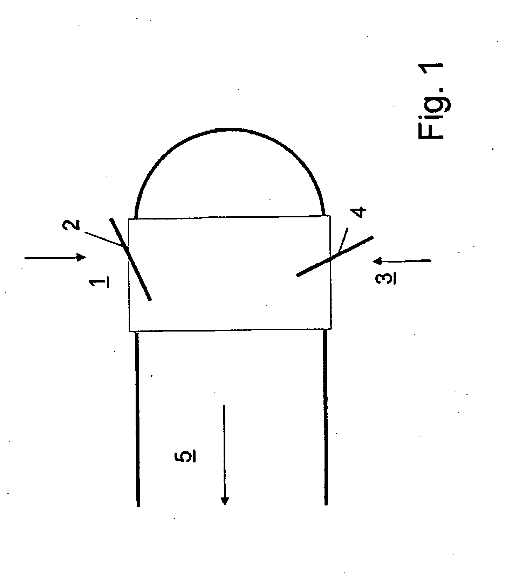

Fig. 1    eine schematische Darstellung eines Teils des Belüftungssystems gemäß dem Ausführungsbeispiel,

Fig. 2    ein Diagramm, welches die Klappensteuerungen von Frischluftklappe und Umluftklappe über der Motorbewegung darstellt, und

Fig. 3    eine Darstellung einer linearen Anpassung der Gesamtluftmenge bei unterschiedlichen maximalen Luftmengen, die durch den Frischluftkanal und den Umluftkanal strömen können, wie sie gemäß dem zweiten Ausführungsbeispiel vorgesehen ist.

Ein Kraftfahrzeug-Belüftungssystem, das vorliegend in Verbindung mit einer nachgeordneten Klimaanlage steht, weist einen Frischluftkanal 1 zur Führung eines ersten Teilluftmassenstroms mit einem ersten Steuerorgan, vorliegend einer Frischluftklappe 2, die am Ende des Frischluftkanals 1 angeordnet ist, und einen Umluftkanal 3 zur Führung eines zweiten Teilluftmassenstroms mit einem zweiten Steuerorgan, vorliegend einer Umluftklappe 4, die am Ende des Umluftkanals 3 angeordnet ist, sowie einen kurzen, gemeinsamen Luftkanal 5 auf, an dessen Ende die Klimaanlage (nicht dargestellt) mit Gebläse, Verdampfer, Heizer und ggf. Zuheizer angeordnet ist.

Um den Insassen des Kraftfahrzeugs einen möglichst großen Komfort zu geben, sind der Frischluftkanal 1 und der Umluftkanal 3 derart ausgelegt, dass durch beide die gleiche maximale Luftmenge strömen kann. Ferner ist mit Hilfe von Kurvenscheiben die Stellbewegung der Klappen 2 und 4 derart auf einander abgestimmt, dass die Gesamtluftmenge beim Umschalten von Frischluft- auf Umluftbetrieb und umgekehrt, während des gesamten Stellvorgangs konstant bleibt.

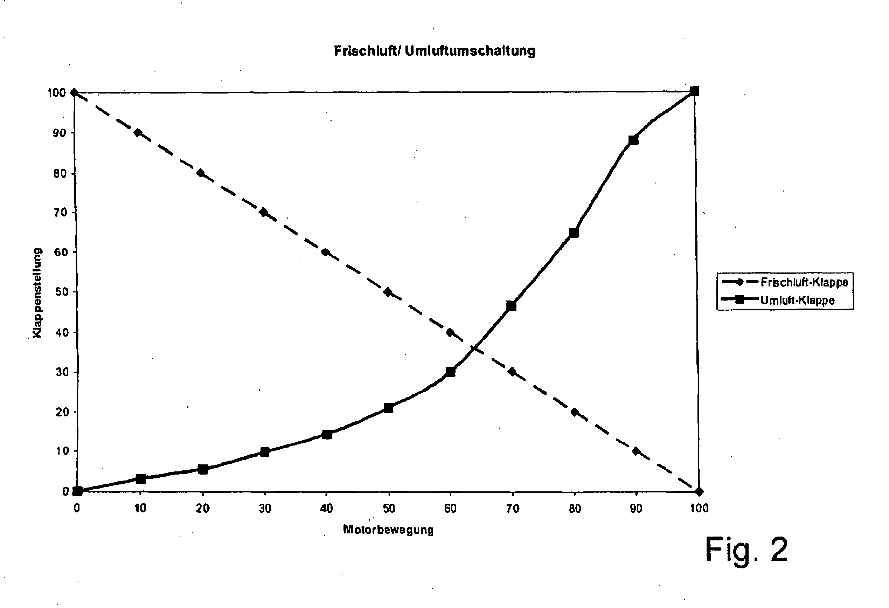

In Fig. 2 ist beispielhaft der Zusammenhang von Frischluftklappenstellung und Umluftklappenstellung über der Motorbewegung des gemeinsamen Motors dargestellt. Gemäß dem vorliegenden Ausführungsbeispiel schließt die Frischluftklappe 2 entsprechend der Motorbewegung (linearer Zusammenhang). Der Verlauf Umluftklappenstellung ist jedoch vorliegend nicht linear, sondern die Veränderung der Klappenstellung in Verhältnis zur Motorbewegung ist im Anfangs- (erste Hälfte) und Endbereich (letztes Zehntel) kleiner als ab dem sechsten Zehntel bis zum neunten Zehntel der Motorbewegung. Die Drehgeschwindigkeit des Motors ist über die Stellbewegung hin im Wesentlichen, d.h. abgesehen vom Moment des Anlaufens und Stoppens, konstant.

Natürlich ist gemäß dem vorliegenden Ausführungsbeispiel auch im Falle eines Umschaltens zwischen Teil-Frischluftbetrieb und Teil-Umluftbetrieb eine konstante Gesamtluftmenge gewährleistet.

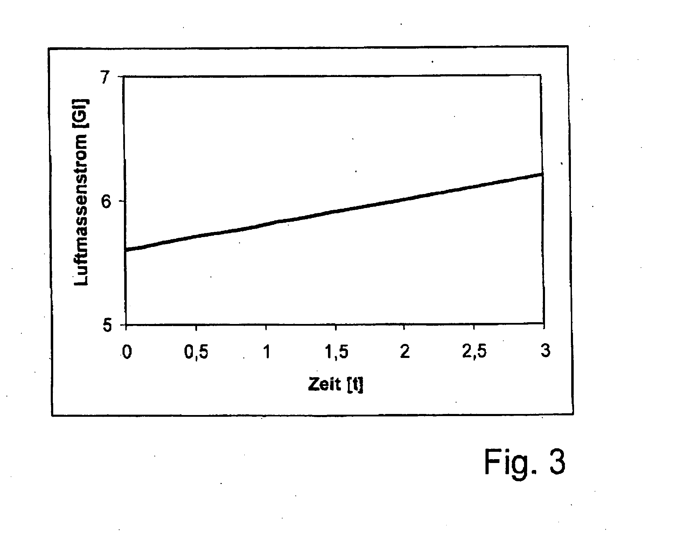

Gemäß dem zweiten Ausführungsbeispiel ist die maximale Frischluftmenge kleiner als die maximale Umluftmenge. Dies ist häufig der Fall, da in der Regel die Druckverluste im Frischluftkanal größer als die Druckverluste im Umluftkanal sind. Somit ändert sich auf Grund der unterschiedlichen Druckverluste in den Kanälen notwendigerweise die Gesamtluftmenge beim Umschalten von Frischluft- auf Umluftbetrieb und umgekehrt. Um den Insassen jedoch einen größtmöglichen Komfort zu bieten, ist für den Fall der Umschaltung von Frischluft- auf Umluftbetrieb und umgekehrt eine zeitabhängige, vorliegend lineare Regelung der Gesamtluftmenge vorgesehen, wie sie in Fig. 3 dargestellt ist

Die Regelung kann beispielsweise im Falle einer etwas größeren Umluftmenge als Frischluftmenge auf einfache Weise derart erfolgen, dass während der ersten 80% des Umschaltvorgangs die Luftmenge, wie im ersten Ausführungsbeispiel durch entsprechende Stellbewegungen der Klappen konstant gehalten wird, wenn die Frischluftklappe vollständig geschlossen ist, bewegt sich die Umluftklappe noch weiter, wodurch sich ein Luftmassenanstieg am Ende des Umschaltvorgangs ergibt. Dieser erfolgt nicht schlagartig, sondern zeitlich verzögert, so dass der Komfort nicht beeinträchtigt wird.

Auf Grund des "mechanischen" Zusammenhangs zwischen Motorbewegung und Klappenstellung, welche die Gesamtluftmenge konstant hält, ist gemäß keinem der zuvor beschriebenen Ausführungsbeispiele eine zusätzliche Regelung des Gebläses o.ä. erforderlich.

**Patentansprüche**

1.  Verfahren zur Regelung des Zusammenführens zumindest zweier Teilluftmassenströme zu einem Gesamtluftmassenstrom bei einem Kraftfahrzeug-Belüftungssystem, wobei mindestens ein erstes Steuerorgan (2) in oder am Ende eines ersten Kanals (1) zur Führung eines Teilluftmassenstroms und ein zweites Steuerorgan (4) in oder am Ende eines zweiten Kanals (3) zur Führung eines Teilluftmassenstroms angeordnet sind und die Luft anschließend über einen zumindest bereichsweise gemeinsamen Luftkanal (5) als Gesamtluftmassenstrom einem ansaugenden Gebläse zugeführt wird, **dadurch gekennzeichnet, dass** bei einer Änderung der Drosselung eines der Teilluftmassenströme durch eine Stellbewegung eines der Steuerorgane (2 bzw. 4) mit konstanter Geschwindigkeit, insbesondere mit konstanter Drehgeschwindigkeit, und das jeweils andere Steuerorgan mit einer sich ändernden Geschwindigkeit, insbesondere mit sich ändernder Drehgeschwindigkeit, verstellt wird, so dass der Gesamtluftmassenstrom konstant bleibt oder sich während der Stellbewegung stetig von einem Ausgangsniveau auf ein Endniveau ändert.

**2.** Verfahren nach einem der vorhergehenden Ansprüche, **dadurch gekennzeichnet, dass** die Annäherung des Gesamtluftmassenstromes von Ausgangsniveau auf Endniveau linear erfolgt.

**3.** Verfahren nach einem der vorhergehenden Ansprüche, **dadurch gekennzeichnet, dass** bei unterschiedlichem Ausgangsniveau und Endniveau die Gesamtluftmenge konstant gehalten wird, bis das erste der Steuerorgane seine Endstellung erreicht hat und anschließend das andere Steuerorgan in seine Endstellung bewegt wird.

**4.** Verfahren nach Anspruch 3, **dadurch gekennzeichnet, dass** die Änderung der Luftmenge nach dem vollständigen Erreichen der Endstellung des ersten Steuerorgans linear, progressiv oder degressiv durch die Stellbewegung des zweiten Steuerorgans erfolgt.

**5.** Verfahren nach einem der vorhergehenden Ansprüche, **dadurch gekennzeichnet, dass** das Steuerorgan, das mit konstanter Drehgeschwindigkeit verstellt wird, eine Umluftklappe (4) ist.

**6.** Verfahren nach einem der vorhergehenden Ansprüche, **dadurch gekennzeichnet, dass** das eine Steuerorgan eine Frischluftklappe (2) und das andere Steuerorgan eine Umluftklappe (4) ist.

**7.** Kraftfahrzeug-Belüftungssystem mit mindestens zwei Steuerorganen (2 und 4), die in oder am Ende von Kanälen (1 und 3) angeordnet sind, und einem nachgeordneten, Luft ansaugenden Gebläse, wobei die Luft nach den Kanälen über einen zumindest bereichsweise gemeinsamen Luftkanal (5) dem Gebläse zugeführt wird, **gekennzeichnet durch** eine Steuerung der Stellorgane nach einem der Ansprüche 1 bis 6.

**8.** Kraftfahrzeug-Belüftungssystem nach Anspruch 7, **dadurch gekennzeichnet, dass** genau zwei Steuerorgane vor dem gemeinsamen Luftkanal (5) und dem Gebläse vorgesehen sind, wobei ein Steuerorgan eine Frischluftklappe (2) und das andere Steuerorgan eine Umluftklappe (4) ist.

**9.** Kraftfahrzeug-Belüftungssystem nach Anspruch 7 oder 8, **dadurch gekennzeichnet**, **dadurch gekennzeichnet, dass** das Kraftfahrzeug-Belüftungssystem zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

**1.** A method for regulating the merging of at least two partial air mass flows into one total air mass flow in a motor vehicle ventilation system, at least one first control member (2) being arranged in or at the end of a first duct (1) for guiding a partial air mass flow and a second control member (4) being arranged in or at the end of a second duct (3) for guiding a partial air mass flow, and air then being supplied to a sectioning fan via an at least regionally common air duct (5) as a total air mass flow, **characterized in that** the respectively other control member is adjusted at a varying speed, in particular at a varying rotational speed, when the throttling of one of the air massflows is changed by an actuating movement of one of the control members (2 or 4) at a constant speed, in particular at a constant rotational speed, so that the total air mass flow remains constant or steadily changes during the actuating movement from a starting level to a final level.

**2.** A method according to any one of the preceding claims, **characterized in that** the approximation of the total air mass flow from the starting level to the final level takes place in a linear fashion.

**3.** A method according to any one of the preceding claims, **characterized in that** the total air volume is kept constant when the starting level and final level are different until the first of the control members has preached the finial position thereof and then the other control member is moved to the final position thereof.

4. The method according to claim 3, **characterized in that**, after the final position of the first control member has been completely reached, the change in the air volume is carried in a linear, progressive or degressive manner by the actuating movement of the second control member. carried in a linear, progressive or depressive manner by the actuating movement of the second control member.

5. A method according to any one of the preceding claims, **characterized in that** the control member which is adjusted at the constant rotational speed is a recirculating air flap (4).

6. A method according to any one of the preceding claims, **characterized in that** the one control member is a fresh air flap (2) and the other control member is a recirculating air flap (4).

7. A motor vehicle ventilation system comprising at least two control members (2 and 4), which are arranged in or at the end of ducts (1 and 3), and a downstream fan taking in air, after the ducts the air being supplied to the fan via an at least regionally common air duct (5), **characterized by** control of the actuating members according to any one of claims 1 to 6.

8. The motor vehicle ventilation system according to claim 7, **characterized in that** exactly two control members are provided in front of the common air duct (5) and the fan, wherein one control member is a fresh air flap (2) and the other control member is a recirculating air flap (4).

9. The motor vehicle ventilation system according to claim 7 or 8, **characterized in that** the motor vehicle ventilation system comprises at least one of the following components: heat exchanger, radiator, evaporator, falter, temperature mixing flap, mixing chamber, one or more flow ducts, and one or more control flaps for distributing the air to the discharge ducts.

**Revendications**

1. Procédé de régulation de la combinaison d'au moins deux flux massiques d'air partiels formant un flux massique d'air total concernant un système de ventilation d'un véhicule automobile, où au moins un premier organe de commande (2) est disposé dans ou au niveau de l'extrémité d'un premier conduit (1) servant au guidage d'un flux massique d'air partiel, un deuxième organe de commande (4) étant disposé dans ou au niveau de l'extrémité d'un deuxième conduit (3) servant au guidage d'un flux massique d'air partiel, et l'air est fourni ensuite, comme flux massique d'air total, à un pulser aspirant, via un conduit d'air (5) au moins partiellement commun, **caractérisé en ce que**, dans le cas d'une modification de l'étranglement de l'un des flux massiques d'air partiels, par un mouvement de réglage de l'un des organes de commande (2 ou 4) à vitesse constante, en particulier à vitesse de rotation constante, l'autre organe de commande, à chaque fois, est réglé à une vitesse qui se modifie, en particulier à une vitesse de rotation qui se modifie, de sorte que le flux massique d'air total reste constant, ou bien au cours du mouvement de réglage, se modifie en continu, passant d'un niveau de départ à un niveau de fin de course.

2. Procédé selon l'une quelconque des revendications précédentes, **caractérisé en ce que** l'approximation du flux massique d'air total passant d'un niveau de départ à un niveau de fin de course se produit de façon linéaire.

3. Procédé selon l'une ou l'autre des revendications précédentes, **caractérisé en ce que** le débit d'air total, quand le niveau de départ et le niveau de fin de course sont différents, est maintenu constant, jusqu'à ce que le premier des organes de commande ait atteint sa position de fin de course et, ensuite, l'autre organe de commande est déplacé dans sa position de fin de course.

4. Procédé selon la revendication 3, **caractérisé en ce que** la modification du débit d'air, une fois que la position de fin de course du premier organe de commande a été complètement atteinte, se produit de façon linéaire, progressive ou dégressive sous l'effet du mouvement de réglage du deuxième organe de commande.

5. Procédé selon l'une quelconque des revendications précédentes, **caractérisé en ce que** l'organe de commande, qui est réglé à vitesse de rotation constante, est un volet d'air recycle (4).

**6.** Procédé selon l'une quelconque des revendications précédentes, **caractérisé en ce que** l'un des organes de commande est un volet d'air frais (2), l'autre organe de commande étant un volet d'air recyclé (4).

**7.** Système de ventilation d'un véhicule automobile comprenant au moins deux organes de commande (2 et 4) qui sont disposés dans ou au niveau de l'extrémité de conduits (1 et 3), et un pulseur aspirant de l'air disposé en aval, où l'air en aval des conduits est fourni au pulseur, via un conduit d'air (5) au moins partiellement commun, **caractérisé par** un pilotage des organes de commande selon l'une quelconque des revendications 1 à 6.

**8.** Système de ventilation d'un véhicule automobile selon la revendication 7, **caractérisé en ce qu'**il est prévu précisément deux organes de commande en amont du conduit d'air commun (5) et du pulseur, où un organe de commande est un volet d'air frais (2), l'autre organe de commande étant un volet d'air recycle (4).

**9.** Système de ventilation d'un véhicule automobile selon la revendication 7 ou 8, **caractérisé en ce que** le système de ventilation d'un véhicule automobile comprend au moins l'un des composants suivants : un échangeur de chaleur, une radiateur, un évaporateur, un filtre, un volet mélanger de température, une chambre de mélange, un ou plusieurs conduits d'écoulement et un ou plusieurs volts de commande pour la répartition de l'air aux conduits de sortie.

Fig. 1

**Frischluft/ Umluftumschaltung**

Fig. 2

EP 1 741 584 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19752567 A1
- DE 10154387 A1